# EUROPEAN PATENT APPLICATION

(11) **EP 3 537 205 A1**
(43) Date of publication of application: **11.09.2019**
(21) Application number: 18159958.0
(22) Date of filing: 05.03.2018
(51) Int. Cl.: G02F 1/01, H04B 10/11

(54) **ELECTRO-ABSORPTION MODULATOR ARRAY AND A DRIVE CIRCUIT THEREOF**

(71) Applicant: RISE Acreo AB, 164 25 Kista (SE)
(72) Inventor: WANG, Qin, 164 25 Kista (SE); PLATT, Duncan, 601 17 Norrköping (SE); SALTER, Michael, 164 25 Kista (SE); JAKONIS, Darius, 601 17 Norrköping (SE); LIM, Jang-Kwon, 164 25 Kista (SE)
(74) Representative: AWA Sweden AB

(57) **Abstract**

The present inventive concept relates to a drive circuit for operating an electro-absorption modulator (EAM) array and an electro-absorption modulator (EAM) array comprising a plurality of EAM pixels arranged on a substrate. The drive circuit comprises a first switch (T1), and a second switch (T2) connected in series with the first switch wherein the first switch (T1) is configured to be connected in parallel with at least one capacitive load. Further, the drive circuit comprises a current sensing circuit connectable to one or more capacitive loads and being configured to detect a current output from the capacitive loads, and a control unit configured to open/close the first switch (T1) and the second switch (T2) and charge/discharge the capacitive loads or activate/deactivate the current sensing circuit.

## Description

### TECHNICAL FIELD OF THE INVENTION

The present invention relates to a drive circuit for operating an electro-absorption modulator (EAM) array, and to an EAM array employing such a drive circuit.

### BACKGROUND

Free space optics (FSO) systems are known to provide optical beams which are highly directional. The FSO systems thus have proven useful in transmitting significantly higher data rates with increased transmission security. Additionally, FSO systems eliminate the requirement of using over-allocated radio frequency (RF) bands, which is the conventional technique for long distance communication links such as satellite (CubeSat) and unmanned aerial vehicle (UAV) systems.

FSO systems provide an alternative for the low data rate (in the order of kbps in satellite applications) high beam divergence, and transmission losses of RF systems. To this end, asymmetrical retroreflective free space optic (RFSO) architectures using modulated retro-reflectors (MRR) have been developed to facilitate CubeSat and UAV applications as the localization and tracking complexities are potentially moved to the ground station.

Further, in most FSO applications a larger FOV (Field Of View) is necessary. In an asymmetrical optical communications link only one side of the link has a transmitting (TX) light source. Due to laser divergence, atmospheric loss, etc. only a small portion of the transmitted light will be focused onto the EAM for modulation and return. The larger the FOV, the larger the portion of TX energy is received and the higher the communication link margin. In more practical terms, e.g. for ground communications to a LEO (Low Earth Orbit) satellite, a higher FOV also reduces the requirements of the pointing of the satellite towards the ground base station and therefore results in increased robustness/reliability. Moreover, In FSO applications, the light trikes the EAM array and returns to the source, which requires an array of many small EAM pixels, and a suitable method for driving them.

Pixelated electro-absorption modulator (EAM)-based MRR systems have been proven successful in achieving high data rates of 70 Mbps in lab conditions and 45 Mbps in outdoor applications. In an asymmetrical optical communication link only one side of the link has a transmitting light source. In a LEO satellite due to laser divergence, atmospheric loss, etc. only a small portion of the transmitted light will be focused onto the EAM for modulation and return. Consequently, this limits the margin of the communication link of the FSO system. A challenge of high FOV (Field Of View) EAM based MRRs arises when there is a need for driving large arrays of many small pixels, which is necessary for achieving high data rates.

Therefore, there is a need to achieve high data rate FSO communication links which increase the communication link margin and reduces the accuracy requirements of the accurate pointing of the satellite towards the ground base station. Additionally, it is desirable to realize FSO systems with MRRs which, provide a broad vision for UAV equipment in communication to the ground station, preferably achieving an "all round vision".

### SUMMARY OF THE INVENTION

It is accordingly an object of the present invention to provide a drive circuit for operating an electro-absorption modulator (EAM) array, and an EAM array which alleviate all or at least some of the above-discussed drawbacks of the presently known systems.

This object is achieved by means of a drive circuit and an EAM array as defined in the appended claims.

The term exemplary is in the present context to be understood as serving as en example, instance or illustration.

According to a first aspect of the present invention there is provided a drive circuit for operating an EAM array having a plurality of EAM pixels, the drive circuit comprising:
a first switch;
a second switch connected in series with the first switch;
a first power supply rail and a second power supply rail, wherein the first switch and the second switch are connected between the first power supply rail and the second power supply rail such that a current path is formed from the first power supply rail to the second power supply rail when the first switch and the second switch are closed (i.e. conducting);
wherein the first switch is configured to be connected in parallel with at least one capacitive load;
a current sensing circuit connected to said first switch and connectable to the at least one capacitive load and being configured to detect a current output from the at least one capacitive load when connected to said at least one capacitive load; and
a control unit configured to:
   in a first mode, close the first switch and open the second switch in order to discharge the at least one capacitive load;
   in a second mode, open the first switch and close the second switch in order to charge the at least one capacitive load;
   in a third mode, open the first switch and open the second switch in order to detect any current output from the at least one capacitive load by means of the current sensing circuit.

Hereby presenting a drive circuit suitable for operating large EAM arrays of many small pixels (which can be approximated as capacitive loads), capable of achieving a higher fill factor and lower power consumption than previously known solutions. Moreover, the inventive drive circuit is suitable to use with III-V compound semiconductors. The III-V compound semiconductors are obtained by combining group III elements (essentially Al, Ga, In) with group V elements (essentially N, P, As, Sb), such as e.g. GaAs or InP, which are suitable for applications in the NIR (near infrared) spectrum. Naturally, a single drive circuit is not intended to operate the whole array, but instead one or more pixels, as will be explained in the following.

The present invention is at least partly based on the realization that in order to achieve high data rates in e.g. EAM based modulating retro-reflectors (MRRs) having a large FOV, it is necessary to drive large arrays with many small pixels. For example, for high speed operation (500 MHz or higher), it is deemed necessary to keep the pixel size smaller than 250 µm due to the diodes' intrinsic capacitance which increases proportionally with the area. Further, in order to achieve a high FOV, the array size must be increased, and as previously explained, in order to maintain high speed capability the pixel size must be kept constant which results in an almost unmanagable amount of individual pixels. However, by using the same drive circuit to sense a current output from the load, and in particular in EAM applications, one can effectively determine a location of the laser spot on the array. This in turn allows for actively driving only a small portion of the large array at any given time, which accordingly reduces power consumption levels. In other words, the size of the array is effectively decoupled from the power consumption.

The first power supply rail and the second supply rail provide the needed (DC) supply voltage to the circuit as known in the art. As is readily understood by the skilled reader the voltages may be positive or negative, and one of the rails may be grounded.

Further, the current sensing circuit may be any suitable current sensing device as known in the art, e.g. any device that detects and converts current to an easily measured output voltage, which is proportional to the current through the measured path. For example, the current circuit may comprise a current sensing resistor which can be connected to an OP amplifier arranged in accordance with different techniques (e.g. high-side or low-side current sensing) depending on the desired application and specifications.

The capacitive load may be any load having a capacitive component such as e.g. a photodiode, MOS-capacitor, etc.

The switches of the drive circuit may be any suitable controllable electronic switches. Preferably, the switches are in the form of semiconductor devices such as e.g. transistors. The switches may accordingly be bipolar junction transistors (BJTs), heterojunction bipolar transistor (HBTs), Field effect transistors (FETs), etc.

In accordance with an exemplary embodiment of the present invention, the first switch and the second switch are n-channel and/or p-channel field effect transistors (FETs). Thus, the transistors may for example be MOSFETs and/or JFETs. The transistors may be arranged in a complementary structure, i.e. in a CMOS (complementary metal-oxide-semiconductor) topology with a complementary and symmetrical pair of p-type and n-type FETs.

Further, in accordance with another exemplary embodiment of the present invention, wherein the first switch and the second switch are n-channel FET transistors; and
wherein a first gate terminal and a second gate terminal of the first and second n-channel FET transistors are connected to a first alternating current input/drive signal and a second alternating current input/drive signal, wherein the first alternating current input/drive signal and the second alternating current input/drive signal are 180° ± 45° out of phase. As mentioned in the foregoing, for high speed EAM applications it is desirable to integrated the electronics with the optical array (c.f. CMOS visible light sensors in cameras). However, in the NIR spectrum where the optical material is based on the III-V material system (e.g. GaAs or InP), integration of complementary devices has proven to be difficult until now. In more detail, the present inventors realized that by utilizing a double n-channel FET configuration it is possible to integrate the switches in the III-V material and achieve a high fill factor for these materials as well. By only relying on n-channel devices, the issues associated with implanting a III-V p-channel device are effectively avoided.

The statement that the two input/drive signals (gate signals) are 180° ± 45° out of phase is to be construed as that they are substantially out of phase with each other. The gate signals may for example be complementary (i.e. 180° out phase). However, the signals need not be perfectly out of phase since in practice, issues with non-ideal components may need to be accounted for.

In accordance with yet another exemplary embodiment of the present invention, the current sensing circuit comprises a current sense resistor and a OP amplifier, the current sense resistor and the OP amplifier configured to generate a sense voltage to detect the current output from the at least one capacitive load. The current sensing circuit may accordingly be placed on an associated Printed Circuit Board (PCB) with the other drive electronics (for operating the switches, providing rail voltages, etc.).

Further, in accordance with another exemplary embodiment of the present invention, the first switch is connected between the first power supply rail and the second switch, and wherein the second switch is connected between the first switch and the second power supply rail, wherein the first power supply rail has a first potential and the second power supply rail has a second potential. Naturally, any one of the first potential and the second potential may be zero, i.e. grounded.

Further, in accordance with another aspect of the present invention, there is provided an electro-absorption modulator (EAM) array comprising a plurality of EAM pixels arranged on a substrate, the EAM array comprising:
a plurality of drive circuits, each drive circuit comprising:
   a first switch;
   a second switch connected in series with the first switch;
   a first power supply rail and a second power supply rail, wherein the first switch and the second switch are connected between the first power supply rail and the second power supply rail such that a current path is formed from the first power supply rail to the second power supply rail when the first switch and the second switch are closed (i.e. conducting);
   wherein the first switch is connected in parallel with at least one EAM pixel;
   a current sensing circuit connected to the at least one EAM pixel and being configured to detect a current output from the at least one EAM pixel; and
   a control unit configured to:
      in a first mode, close the first switch and open the second switch in order to discharge the at least one EAM pixel;
      in a second mode, open the first switch and close the second switch in order to charge the at least one EAM pixel;
      in a third mode, open the first switch and open the second switch in order to detect any current output from the at least one EAM pixel by means of the current sensing circuit.

With this aspect of the invention, similar advantages, exemplary embodiments and preferred features are present as in the previously discussed aspect of the invention, and vice versa. In other words, this aspect utilizes the drive circuit of the previous aspect of the present invention to operate an EAM array having a plurality of EAM pixels. In particular, it is possible to realize an EAM array having a relatively large number of EAM pixels (e.g. 1600 pixels or 6400 pixels) in a reliable and energy efficient manner. Moreover, it is possible to realize the EAM array on a substrate comprising III-V materials.

In accordance with an exemplary embodiment of the present invention, the plurality of drive circuits are integrated in a Printed Circuit Board, PCB, and connected to the plurality of EAM pixels via wire-bond connections between the PCB and the substrate. This allows for facilitated manufacturing and scalability.

Further, in accordance with another exemplary embodiment of the present invention, the plurality of drive circuits are integrated with the plurality of EAM pixels in a monolithic arrangement on the substrate. By integrating the drive circuits in the substrate (more specifically between the EAM pixels on the substrate) bi-directional two-way communication is enabled. Furthermore, this arrangement allows for arranging a curved mirror "behind" the EAM array, which increases the FOV for the EAM array. Behind is in the present context to be understood as on the opposite side of the substrate relative to the light source/incoming light.

Thus, in accordance with an exemplary embodiment of the present invention the EAM array further comprises an external curved mirror arranged on the opposite side of said substrate relative to said EAM pixels, and wherein said EAM array is arranged to transmit the incident light onto said external curved mirror which is arranged to reflect said incident light back towards said EAM array. As mentioned, by using an external curved mirror a higher FOV may be achieved for the EAM array. Also, the EAM array may further include one or more focusing lenses arranged in front of the EAM array in order to achieve a small laser spot size together with the large FOV. An additional advantage is that high FOV is effectively achieved at a low cost since this is achievable by standard low cost optical components.

Even further, in accordance with another exemplary embodiment of the present invention, the plurality of drive circuits are integrated on a CMOS ASIC circuit, the CMOS ASIC circuit being connected to the plurality of EAM pixels via flip-chip bond connections in a hybrid arrangement. In each of these embodiments it is possible to utilize a flat backside mirror which is integrated into the array. This results in a smaller FOV as compared to the embodiment with the monolithic arrangement with a curved mirror but may provide facilitated manufacturing. Thus, in accordance with another exemplary embodiment of the present invention, the EAM array is integrated with a back-side flat mirror to reflect an incident light.

Moving on, in accordance with yet another exemplary embodiment of the present invention, the EAM pixels are arranged in an m-by-n array, the m-by-n array having m rows and n columns, and wherein the EAM array comprises n drive circuits, the first switch of each drive circuit being connected in parallel with each EAM pixel in a separate column of the m-by-n array. Accordingly, the EAM array is operated in a "column-wise" fashion, meaning that each column is treated as a single load and all the pixels within the same column are operated simultaneously.

However, in accordance with yet another exemplary embodiment of the present invention, the first switch of each drive circuit is connected in parallel with only two EAM pixels of said plurality of EAM pixels. In other words, the EAM pixels are operated "pair-wise", meaning that the plurality of pixels are divided in a plurality of separate sub-groups each sub-group consisting of two pixels, and each sub-group is independently operated by one drive circuit.

These and other features of the present invention will in the following be further clarified with reference to the embodiments described hereinafter.

### BRIEF DESCRIPTION OF THE DRAWINGS

For exemplifying purposes, the invention will be described in closer detail in the following with reference to exemplary embodiments thereof illustrated in the attached drawings, wherein:

For exemplifying purposes, the invention will be described in closer detail in the following with reference to exemplary embodiments thereof illustrated in the attached drawings, wherein:
Fig. 1A is a schematic illustration of a drive circuit for operating an electro-absorption modulator (EAM) array in accordance with an embodiment of the present invention;
Fig. 1B is a schematic illustration of a drive circuit in accordance with another embodiment of the present invention;
Fig. 2 is a schematic illustration of a drive circuit in accordance with another embodiment of the present invention;
Fig. 3 is a schematic illustration of drive circuit comprising a current sensing circuit in accordance with an embodiment of the present invention;
Fig. 4A-C are schematic illustrations of the drive circuit from Fig. 1A in a first, second and third (operation) mode;
Fig. 5A-C are a schematic illustrations of the drive circuit from Fig. 1B in the first, second and third (operation) mode;
Fig. 6 is a schematic illustration of an EAM array arrangement with drive electronics integrated into a PCB in accordance with one embodiment of the present invention;
Fig. 7 is a schematic illustration of an EAM array integrated with a CMOS ASIC in a flip-chip hybrid packaging structure in accordance with another embodiment of the present invention;
Fig. 8 is a schematic illustration of a drive circuit in a hybrid CMOS ASIC arrangement in accordance with another embodiment of the present invention;
Fig. 9A is a schematic illustration of a monolithic integrated structure where drive circuit is integrated within the EAM array in accordance with an embodiment of the present invention;
Fig. 9B is a schematic illustration of an m-by-n array of a monolithic structure where the EAM array is operated in a column-wise fashion in accordance with an embodiment of the present invention;
Fig. 10 is a schematic illustration of an external curved mirror arranged with a monolithic integrated EAM array in accordance with an embodiment of the present invention;
Fig. 11 is a schematic illustration of a plurality of external optics, e.g. focusing lenses arranged in front of the EAM array in accordance with an embodiment of the present invention;
Fig. 12 is an illustration of a ray optic computer simulation in an EAM pixel array and the EAM array of Fig. 10 in accordance with an embodiment of the present invention;
Fig. 13 is a schematic illustration of a process with which the monolithic EAM array and drive circuit can be manufactured in accordance with an embodiment of the present invention.

### DETAILED DESCRIPTION

In the following detailed description, some embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

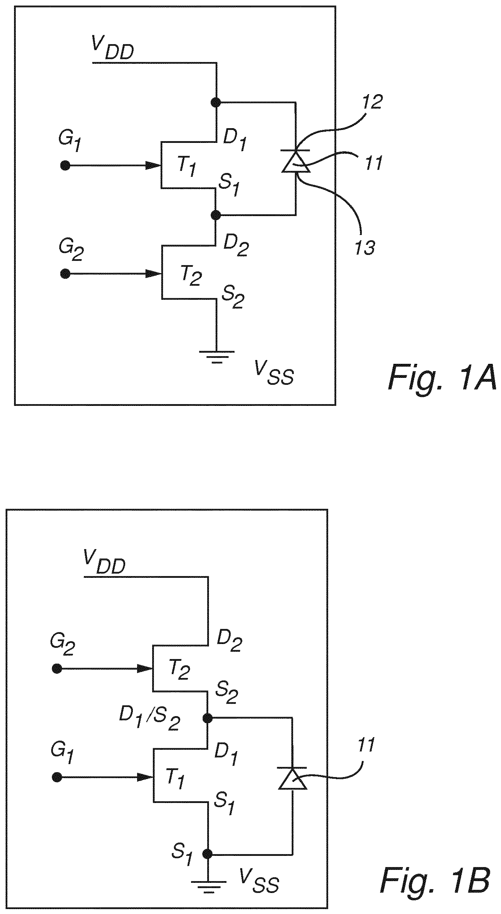

In Fig. 1A a schematic illustration of an exemplary drive circuit for operating an electro-absorption modulator (EAM) array is provided. The drive circuit comprises a first switch T1 and a second switch T2 connected in series. The first switch T1 is connected between a first power supply rail V_{DD} and the second switch T2. The second switch T2 is connected between the first switch T1 and the second power supply rail Vss. The drive circuit further comprises a capacitive load 11. The first switch T1 is connected in parallel with the capacitive load 11. More generally a plurality of drive circuit units may be provided to address an EAM array. Each drive circuit unit may include two or more of such capacitive loads, for example two, three, four, etc. The switches may for example be bipolar junction transistors (BJTs), heterojunction bipolar transistors (HBTs), field-effect-transistors (FETs), metal-oxide-semiconductor field-effect transistors (MOSFETs), junction FET transistors (JFETs), n-type JFETs or p-type JFETs, etc. The switches may have at least three terminals such as a gate terminal G1, G2, a drain terminal D1, D2 and a source terminal S1, S2. The first switch T1 may be connected with the second switch T2 in such an arrangement wherein the source terminal S1 of the first switch T1 is in connection with the drain terminal D2 of the second switch T2.

The capacitive load 11 may be arranged to be connected between the drain terminal D1 of the first switch T1 and the connection node of the source terminal S1 of the first switch T1 and the drain terminal D2 of the second switch T2.

The drive circuit is preferably realized by the first switch T1 and the second switch T2 being in a double n-channel JFET configuration, wherein the process efficiency of producing identical devices may be achieved.

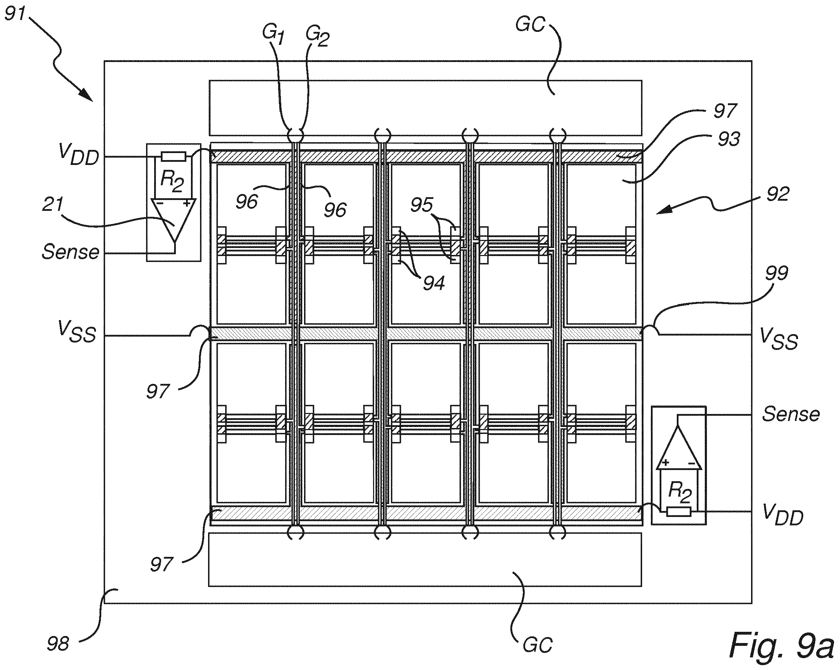

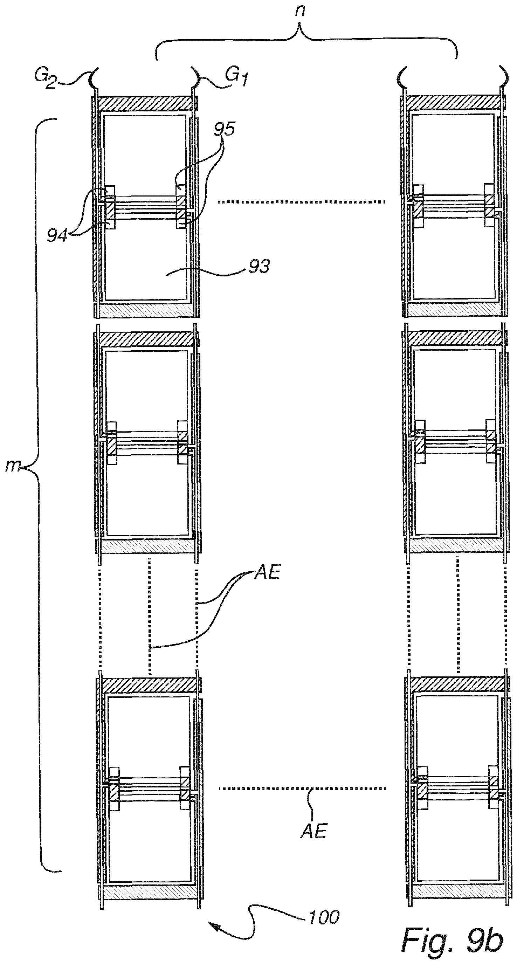

The capacitive load 11 may have the semiconductor structure of a PIN diode with a cathode 12 and an anode 13 terminal. The capacitive loads 11 being addressed/driven/modulated by the drive circuit may therefore be a plurality of the EAM pixels within an integrated EAM array in accordance with one aspect of the current invention. The pixels can be activated/deactivated individually, in a pair-wise or in a column-wise fashion (see e.g. Fig. 9A and Fig. 9B). To operate the EAM pixels in a pair-wise arrangement the drive circuit addressing each of the pixels is a common drive circuit shared by the pixel pair. By employing this arrangement, the array area required for drive electronics is reduced and therefore the fill factor of the EAM array is improved. A plurality of such EAM pixel pairs can be arranged in an m-by-n array and operated in a column-wise fashion to scale up the array size. The cathode 12 and anode 13 terminals of each EAM pixel 11 are configured to be connected to the first drive circuit transistor T1. By alternating the complementary high speed microwave drive signals connected to the gate terminals of the transistors G1, G2 each pixel can be activated/deactivated.

The gate terminals G1, G2 of the first and second transistors T1, T2 are configured to be electrically connected to alternating current AC input/drive signals. The AC input signals may be out of phase in respect to each other. G1 and G2 input signals may preferably differ in phase in a range 135° - 225° and more preferably they are complementary signals i.e. 180° out of phase. The gate input signals G1 and G2 arrive at each transistor at each cycle of circuit activation to open and/or close the transistors in order to charge and/or discharge the capacitive load 11. The charge and discharge period of each capacitive load is determined by the characteristics of the circuit and the capacitive load such as the voltage across the capacitive load V_{c}, the amount of capacitance C, the time constant of the capacitive load (τ), the power supply of the drive circuit (V_{DD}/V_{SS}) or the total impedance in the drive circuit in various constructions. The basics of such charge and discharge cycles are considered to be readily understood by the skilled person in the art and therefore for the sake of brevity, further explanations and details will be omitted in the rest of the description.

Further details of different operation modes of the drive circuit will be provided in reference to figures 1B-5C.

Fig. 1B illustrates a drive circuit in accordance with another embodiment of the present invention where the first switch T1 is arranged to be connected between the second switch T2 and the second power supply rail V_{SS}. The second switch T2 is arranged to be connected between the first power supply rail V_{DD} and the first switch T1. The first switch T1 may be connected with the second switch T2 in such an arrangement wherein the drain terminal D1 of the first switch T1 is connected to the source terminal S2 of the second switch T2. The first switch T1 is configured to be connected in parallel with the capacitive load 11.

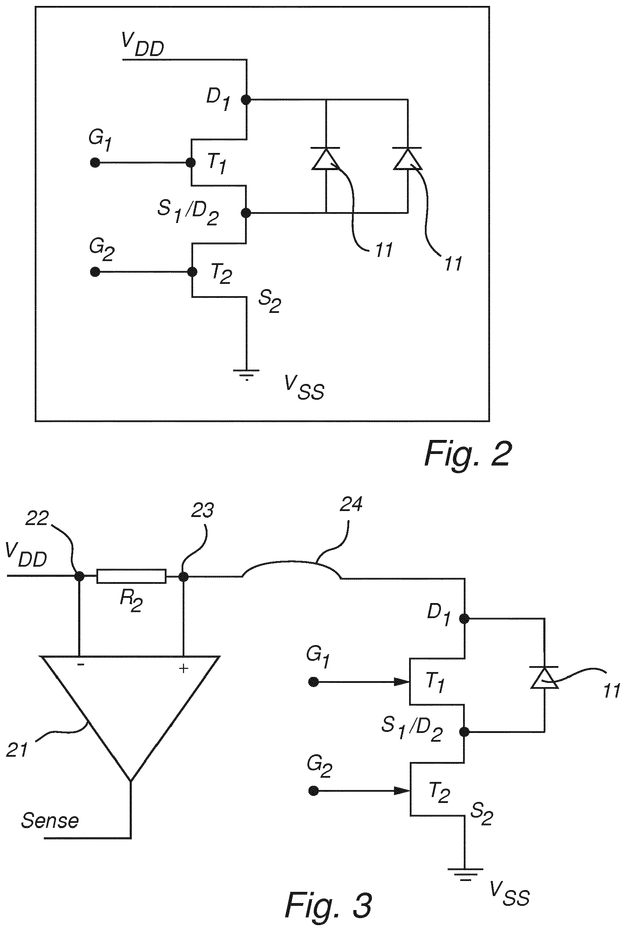

Fig. 2 schematically illustrates the drive circuit wherein the first switch T1 and the second switch T2 are in series and the first switch T1 is connected in parallel with two capacitive loads 11.

Fig. 3 illustrates the schematics of a drive circuit comprising a current sensing circuit in accordance to one embodiment of the current invention. The current sensing circuit comprises a current sense resistor R2 and an OP amplifier 21, the current sense resistor R2 and the OP amplifier 21 are configured to generate a sense voltage sense to detect the current output from the capacitive load 11. The OP amplifier 21 and the sense resistor R2 are here connected to the drain terminal D1 of the first transistor T1 and the cathode terminal 12 of the capacitive load 11. The current sense resistor R2 is connected between the inverting input node 22 and non-inverting input node 23 of the OP amplifier 21. The OP amplifier 21 is connected to the power supply rail V_{DD} at the inverter input node 22.

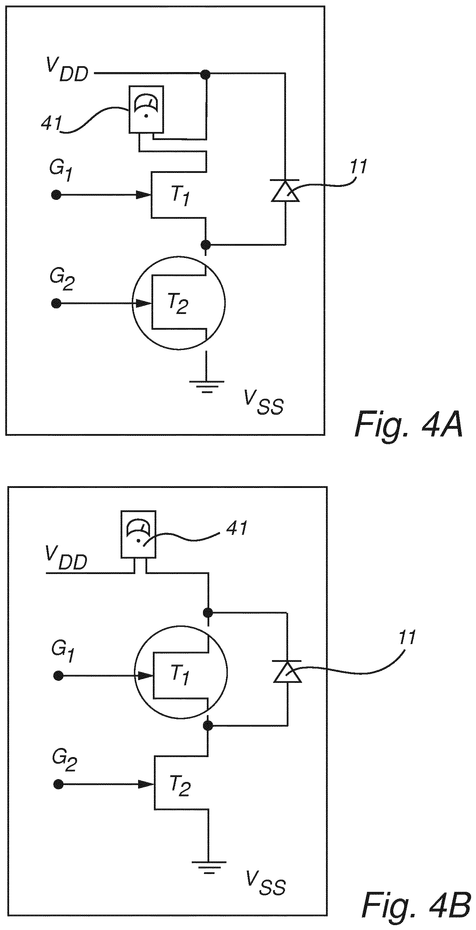

In Fig. 4A an illustration of the drive circuit from Fig. 1A in a first operation mode is provided. The first switch T1 is in closed state and the second switch T2 is in open state. The first switch T1 is connected in parallel with the capacitive load 11. In the first mode current flows through the first switch T1 and the capacitive load 11 is discharged from V_{DD} to 0. The current can be monitored at a current probe 41 arranged in the drive circuit. In more detail, the capacitive load 11 is short circuited by the first switch T1 wherefore the voltage across the capacitive load is brought down to zero and this first operation mode may be labeled as a discharging mode. Also, the potential floating point (node) between the two switches T1, T2 is in this first mode V_{DD}.

In Fig. 4B an illustration of the drive circuit in a second operation mode is provided. The first switch T1 is in open and the second switch T2 is in closed mode with the first switch T1 connected in parallel with the capacitive load 11. In the second mode current flows through the second switch T2 and the capacitive load 11 is charged from 0 to V_{DD}. The current can be measured at a current probe 41 installed in the drive circuit. In more detail, the floating point (i.e. the node between the two switches) is now connected to ground and effectively brought down to zero potential, wherefore the potential at the floating point is decreased from V_{DD} to zero. Accordingly, the voltage across the capacitive load is V_{DD}, and the second operation mode can accordingly be labeled as a charging mode.

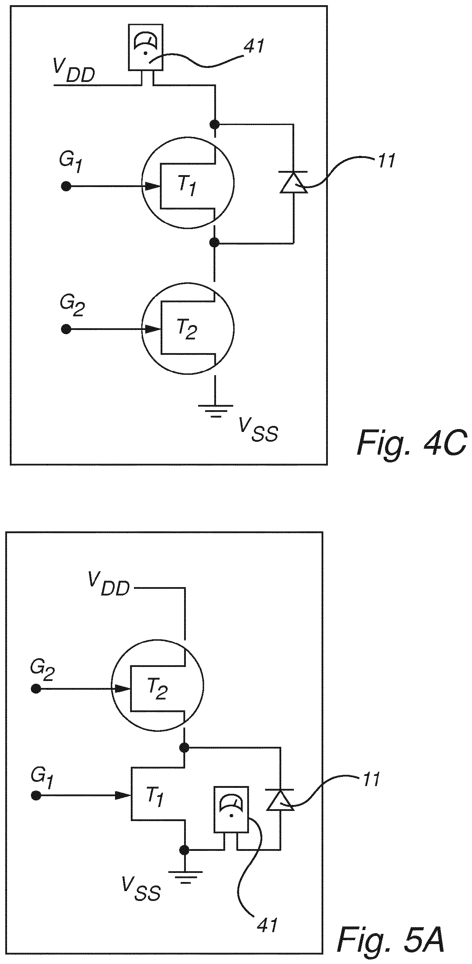

In Fig. 4C an illustration of the drive circuit in the third operation mode is provided. The first switch T1 in open and the second switch T2 in open mode with the first switch T1 connected in parallel with the capacitive load 11. In the third mode a current output generated from the capacitive load is directed to the current sensing circuit (shown here is a current probe 41). In a practical example the current can be generated in a photonic process (e.g. photocurrent generated by a laser illumination of an EAM pixel forming the capacitive load).

Fig. 5A schematically illustrates the first operation mode of the drive circuit illustrated in Fig. 1B. In the first operation mode (i.e. "discharging mode") the first switch T1 is closed (i.e. conducting or on) and the second switch T2 is open (i.e. not conducting or off). The first switch T1 is also here connected in parallel with the capacitive load 11. However, the first switch T1 is now arranged on the "lower side", i.e. between the second power supply rail V_{SS} (grounded in this embodiment) and the second switch T2. In the first mode current flows through the first switch T1 and the capacitive load 11 is discharged from V_{DD} to 0 Volts.

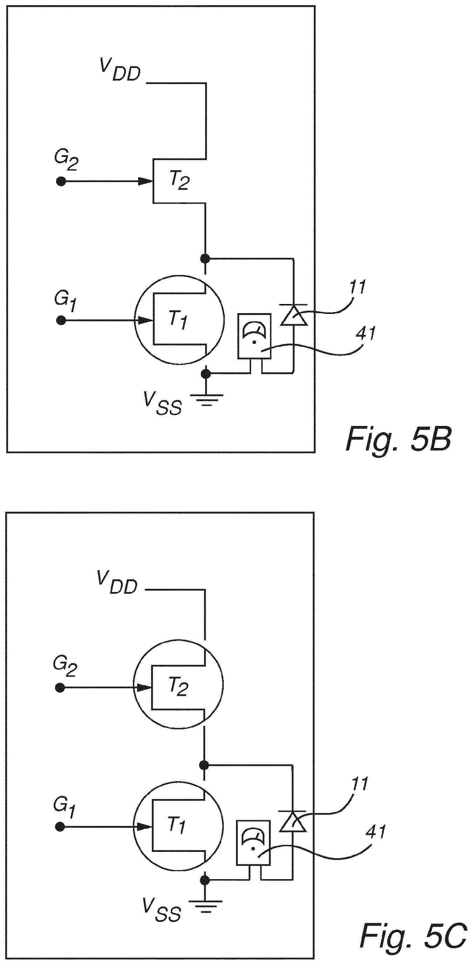

Fig. 5B schematically illustrates the second operation mode of the drive circuit in Fig. 1B. In the second operation mode the first switch T1 is open and the second switch T2 is closed, and the first switch T1 is connected in parallel with the capacitive load 11. In the second mode current flows through the second switch T2 and the capacitive load 11 is charged from 0 Volts to V_{DD}.

Fig. 5C schematically illustrates the third operation mode of the drive circuit illustrated in Fig. 1B. In the third mode the first switch T1 is open and the second switch T2 is open with the first switch T1 connected in parallel with one capacitive load 11. In the third mode a current output generated from the capacitive load 11 is directed to a current sensing circuit. The current sensing circuit being represented by a current probe 41.

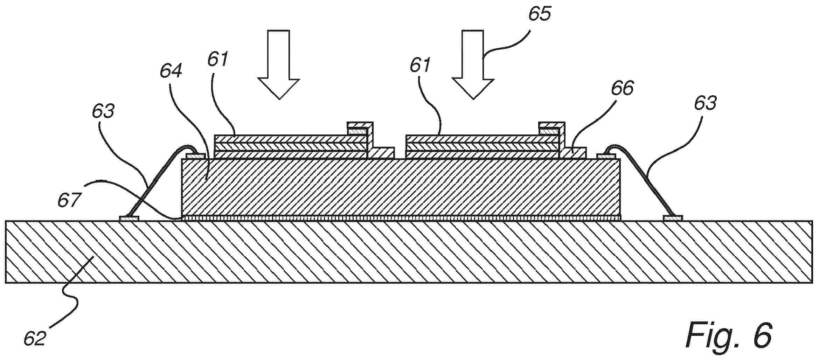

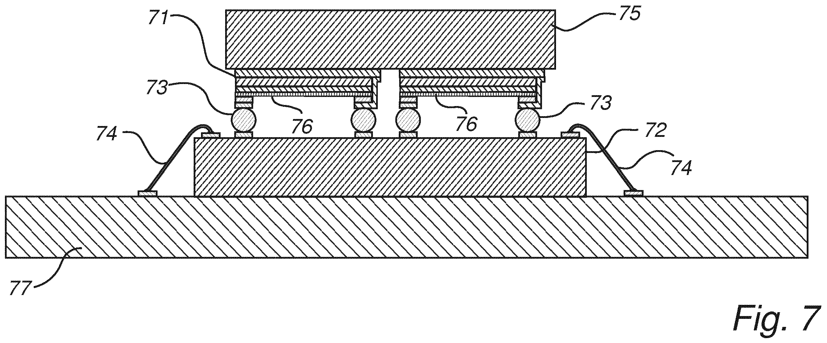

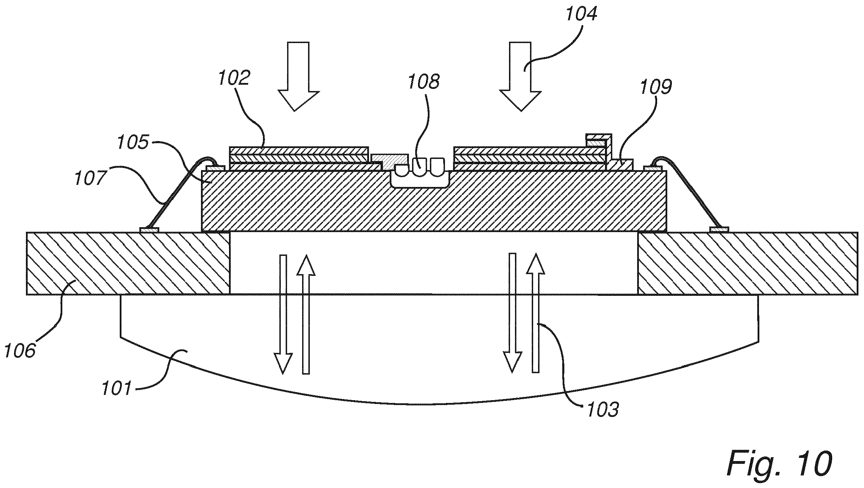

The plurality of drive circuits comprising switches T1, T2 having gate terminals G1, G2, drain terminals D1, D2 and source terminals S1, S2 together with other drive electronics may be subsequently integrated into a PCB (as e.g. shown in Fig. 6), into an application-specific-integrated-circuit (ASIC) unit in a hybrid packaging arrangement (as e.g. shown in Fig. 7) or maybe monolithically integrated with the EAM pixels on a single substrate (as e.g. shown in Fig. 9A and 10). The substrate may be a desired compound combination of III-V semiconductor materials such as GaAs, InP, InAs, InGaAs, InGaAsP, etc.

In Fig. 6 a schematic illustration of a plurality of EAM pixel arrays 61 integrated with a PCB 62 carrying the drive electronics is provided. In this arrangement, all the drive circuits (not shown in detail here) are integrated into the PCB 62 structure and are connected with wire-bonds 63 to each EAM pixel 61 in the plurality of arrays. This does not necessarily mean that each pixel has a separate drive circuit, whilst in fact one drive circuit may be used to operate two or more EAM pixels simultaneously. The EAM pixels 61 are implemented in the face-up arrangement on e.g. an InP substrate 64 with the incident light 65 striking the pixels. The EAM pixels 61 are in contact with the InP substrate 64 with e.g. InGaAs contact layers 66. A flat back-side mirror 67 is arranged to be integrated with the InP substrate 64.

In Fig. 7 a schematic illustration of an EAM array 71 integrated with a CMOS ASIC 72 in a flip-chip hybrid packaging structure is provided. In this embodiment the drive circuit (including the sense circuit) are implemented on the CMOS ASIC 72 structure in the area underneath each EAM pixel 71. Connections to each cathode 12 and anode 13 of each EAM pixel 71 are made to the ASIC 72 through solder balls/bumps 73 between the ASIC 72 and EAM pixels 71. By placing drive and sense electronics on the ASIC 72 integrated drive/sense structure, and connecting it to the PCB 77 by flip-chip wire-bond 74 connection, the fill factor of the array can be improved. To operate this circuit, either by pixel, row or column, the power (e.g. V_{DD}) and ground (e.g. V_{SS}) lines are activated. Then in drive mode, the drive line is switched on and off to modulate the EAM pixel 71. In sense mode (i.e. third operation mode), the drive line is turned off/deactivated, and the sense line voltage measured to determine the photocurrent output of the EAM pixels 71. In this embodiment the EAM pixels 71 are configured to be arranged in face-down flipped orientation in respect to an InP substrate 75. The EAM array 71 may be integrated with a back-side flat mirror 76 to reflect an incident light.

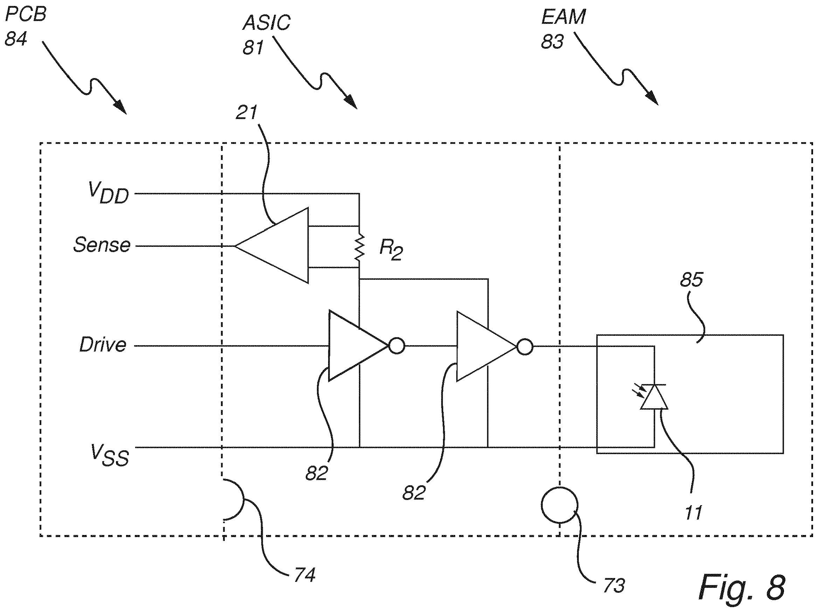

In Fig. 8 a schematic illustration of the drive/sense electronics in a hybrid CMOS ASIC 81 arrangement is provided. The transistors may be arranged in a complementary structure i.e. in a CMOS topology with a symmetrical pair of n-type and p-type JFET transistors. In this arrangement the gate input signals for both gate terminals G1, G2 is a common input/drive signal. Each complementary pair forms a CMOS buffer/inverter unit 82. To address the EAM pixels 83, two of the buffer/inverter units 82 may be arranged to be connected in series. The rest of the electronics e.g. V_{DD} and V_{SS} lines to either "drive" or "sense" each pixel, may be implemented onto a companion PCB 84.

In each of the above discussed drive circuits, a control unit (not shown) and a suitable algorithm could be implemented. For example, the control unit may be configured to scan the array in the "sense" mode (i.e. third operational mode) to find the pixels that have a higher photo-current 85. This would imply that the laser spot has focused on these pixels which locates the beam. The whole array is scanned and only the pixels that are generating photo-current 85 would then be chosen in the next cycle to be driven/modulated with data. The EAM array 83 is operated in this way continuously, i.e. sense, drive, sense, drive, etc. to account for the laser beam moving around on the array. By only driving this selected set of pixels the drive power is tremendously reduced as opposed to the traditional solutions, where the whole array is driven continuously.

In each of the above-mentioned embodiments the EAM array may be integrated with a back-side flat mirror 67, 76 to reflect an incident light. This configuration may provide a facilitated fabrication procedure.

In Fig. 9A a schematic illustration of a monolithic integrated structure 91 where drive/sense electronics are integrated within the EAM array 92 is provided. Here, a single substrate is exploited to implement the EAM pixels 93 and the drive electronics in a space-efficient fashion which allows for selective activation/deactivation of EAM pixels 93 based on the desired application. This arrangement has been found surprisingly beneficial to realize implementation of a large array 92 of small EAM pixels 93 in a power and cost efficient approach.

The array area dedicated for drive electronics is kept to a minimum to maintain a high array fill factor. The drive transistors are implemented between the rows and columns of EAM pixels 93 connecting to the cathode 94 and anode 95 terminals of each EAM pixel. The small EAM pixels 93 are driven by embedded transistors which act as a buffer between the drive electronics from the EAM pixel PIN diode capacitance. Thus the capacitance is reduced significantly, typically by an order of magnitude, and high data rates can be reached. The gate signals G1, G2 for each pixel in a column are routed in a vertical direction on the top metal layer 96 and are in connection with the gate control and sequencing circuits (GC). The V_{DD} and V_{SS} signals are brought in horizontally on the bottom metal layer 97. These signals also serve a double purpose as the reference planes for the gate lines by being brought down vertically. They therefore serve as DC power and ground, as well as RF (AC) ground. The EAM array 92 can be implemented "face-up" and connected to a PCB 98 through wire-bond 99 connections. In the embodiment illustrated in Fig. 9A the current sensing resistor and amplifier are implemented on the PCB 98. By applying power through specific V_{DD} and V_{SS} lines 97 two rows are addressed. Then a specific set of two pixels can be driven/addressed/modulated by applying drive signals to a specific set of G1 and G2 gate terminals. To operate these two pixels in "sense" mode, the gate signals G1, G2 are grounded turning off the drive signals and current through the V_{DD} line would be monitored through the off-chip resistor R2 and sense OP amplifier 21.

In Fig. 9B a schematic illustration of an m-by-n array arrangement of EAM pixels is provided. This arrangement demonstrates the scalability of the EAM array. In this arrangement the EAM array can be operated in a column-wise fashion and each column of the m-by-n array is addressed as a single load by using G1 and G2 gate signals addressing all the EAM pixels (93) within the selected column (100). In the embodiment illustrated in Fig. 9B, the dotted lines (AE) illustrate the array extension in m rows and n columns.

Further, in Fig. 10 a schematic illustration of an external curved mirror 101 arranged with the monolithic integrated EAM array 102 in accordance with an embodiment of the present invention is provided. In this embodiment, the EAM-integrated back-side flat mirror 67, 76 is removed and an external curved back-side mirror 101 is arranged on the opposite side of the substrate relative to the EAM pixels 102. The EAM array is configured to be operated in purely transmissive mode no integrated back-side mirror with a double pass of light 103 through the array and a small corresponding laser spot size. The incident light is therefore transmitted onto the external curved mirror 101. The external curved mirror 101 is arranged to reflect the incident light 104 back on the EAM array. This way a high FOV may be achieved with the EAM array, for instance an FOV of 30 degrees may be achieved. The EAM pixels 102 are implemented on the face-up arrangement with the InP substrate 105 and connected to the PCB 106 via wire-bond 107 connections. The drive circuit 108 and gate contact layers 109 are implemented on the same InP substrate 105.

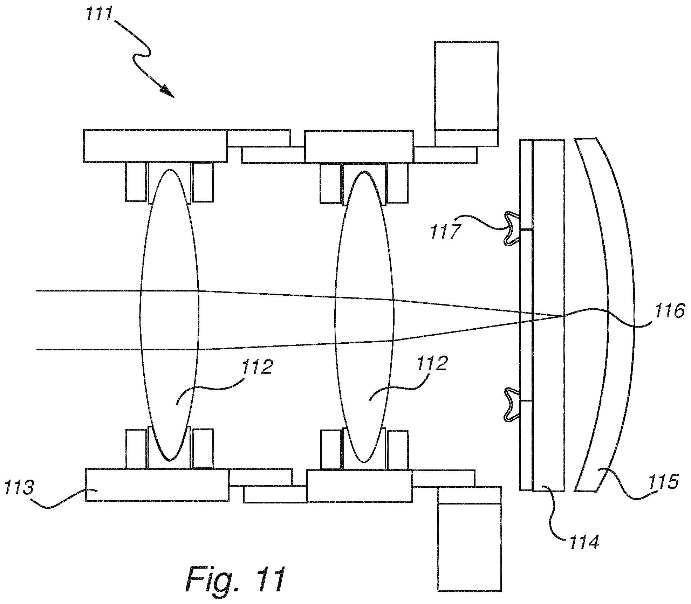

Further, according to another embodiment of the present invention, illustrated in Fig. 11, a plurality of external optics 111, e.g. focusing lenses 112 mounted on lens tube mounts 113 are arranged in front of the monolithic integrated EAM array 114 with external curved mirror 115 in order to achieve a small laser spot 116 size together with the large FOV. This arrangement enables a large FOV while using low cost standard optical components. By achieving a small laser spot 116 size on the EAM array 114 it is possible for the current sensing circuit to sense the photo-current output from individual EAM pixels or small groups of EAM pixels, locate the laser beam and drive/address/modulate a certain portion of the array at any given point in time. This way the power consumption for a large matrix of EAM arrays can be effectively managed.

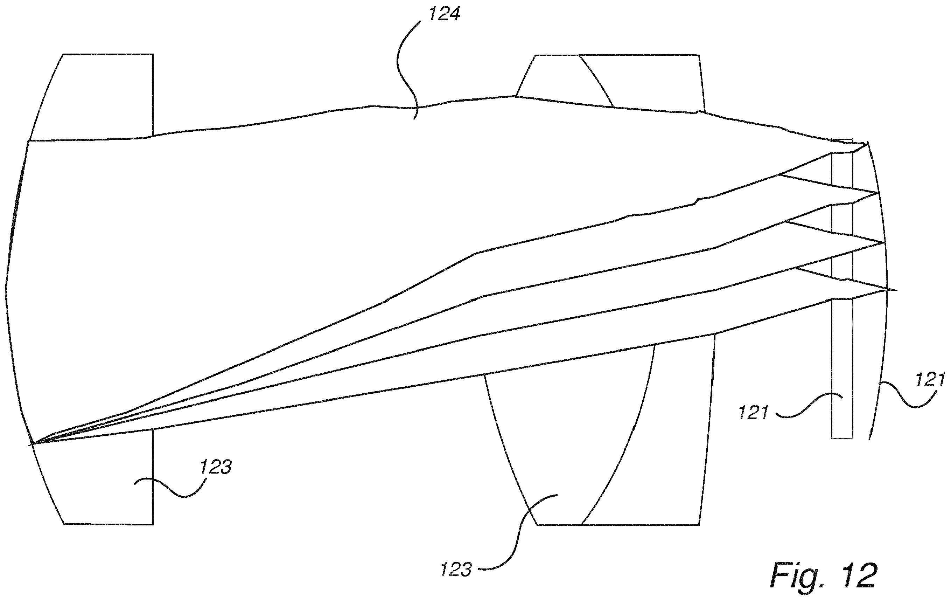

In Fig. 12 a ray optic computer simulation, for an EAM pixel array 121 in full transmission mode and the curved back-side mirror 122 arranged behind the EAM array is illustrated. This arrangement is enabled by using two external focusing lenses 123 arranged in front of the EAM array 121 with incident light 124 passing through the EAM array 121, striking the curved back-side mirror 122, being reflected back through the EAM array 121 onto the external lenses 123 and therefore expanding the FOV. This way, a large FOV is achieved with a large format monolithic integrated EAM and transistor array with a high fill factor.

The EAM pixel size may be in the range of 50 - 250 *µm*² and preferably EAM pixel size of 100 *µm*² and most preferably the EAM pixel size of 250 *µm*² with an EAM array having an optical aperture of 8 mm. In general, the pixel size can be defined in correspondence to the target operation bandwidth. For instance, a 32x32 EAM array with pixel size of 250 *µm*² x 250 *µm*² can be designed to achieve a data rate of 1 Gb/s and FOV of 30 degrees. However, it is understood that for the skilled person in the art it is readily available to make various design choices of EAM pixel sizes and optical apertures to achieve desired variations of FOVs and operation bandwidths.

The arrangement and interconnection between the EAM pixels and transistors can be designed and optimized by advanced simulation tools (e.g. Cadence simulation tools) identifying trade-offs regarding desired device performance and process feasibilities. The monolithic integration arrangement forms compact EAM/transistor arrays which are readily scalable to large format 2D matrices.

Alternatively, or additionally, any of the above-discussed EAM arrangements either with reflective or transmissive modulators may be realized by combination of the modulators with retroreflective corner cube retroreflectors (not shown).

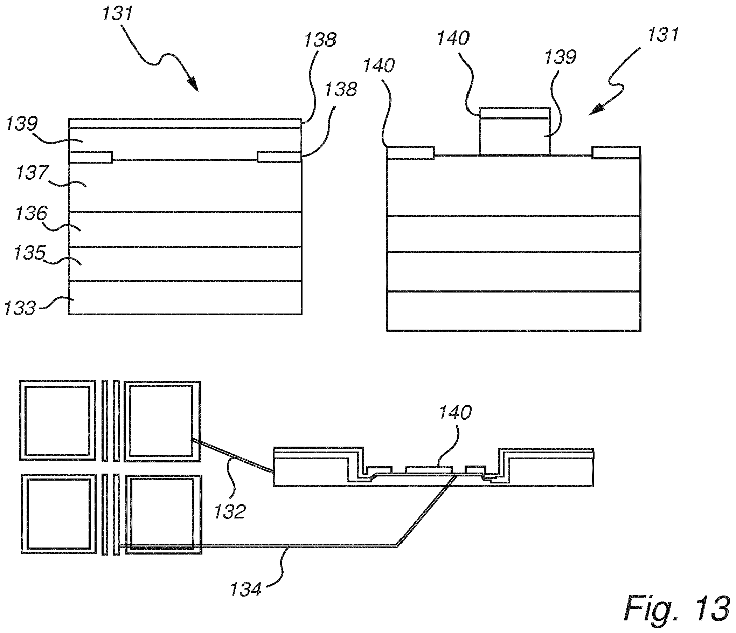

In Fig. 13 an example process with which the monolithic EAM arrays and transistors can be manufactured is illustrated. To realize a monolithic integration of the transistor epi structures 131 with the EAM quantum wells (not shown) in the EAM array, the overgrowth fabrication process by e.g. metalorganic vapor phase epitaxy (MOVPE) is used. The EAM epi structures with intrinsic multiple quantum wells embedded in a PIN diode structure 132 will be first grown on e.g. an InP substrate 133.

Subsequently, desired area 134 between the EAM pixels 132 for embedding the transistors will be etched away and transistors will be grown on the same substrate 133. Afterwards, a dielectric mask (not shown) (e.g. SiN or SiO₂) will be formed (e.g. by material deposition techniques such as evaporation or sputtering) to enable a selective epi growth to integrate the transistor epi layers 131 with designed thickness and doping profiles in the EAM array. The layers may include an InP buffer 135, a field stop layer 136, N-channel 137 and an InGaAs contact 138.

The InP buffer layer 135 is involved in both EAM pin diode structure and embedded transistors utilizing either epi growth or overgrowth methods. In general, a buffer layer 135 is needed to grow epi layers on substrates to ensure the crystal quality of epi structures. In the present invention, InP buffer layer 135 is grown on the Si-InP substrate 133 before growing EAM or transistor structures, such as field stop 136, N-channel 137, InGaAs contact 138 and gate layers 139 in the defined transistors areas.

For the embedded transistors, the thickness of the InP buffer 135 layer can be adjusted during epi overgrowth process. This will provide flexibility to tune the total height of the full transistor structures to optimize the process of device integration. By optimizing the height difference between the EAM pin diode structure and the integrated transistor structure, a plane tomographic surface is guaranteed for the integrated devices. Thus, helping reduce the process complexity, especially in the interconnection steps to link EAM pixels and transistors.

To fabricate the gate terminals 139 of the transistors another epi overgrowth step is performed with yet another selective area epi mask formed by dielectric thin layer deposition, lithography and dry etching steps. It is worth to note, the InGaAs contact layer 138 will be etched away before starting the second overgrowth process step to obtain the gate epi layer, and then the transistor epi structure will be completed by the final InGaAs thin layer 140 to ensure forming high quality gate electrodes.

Transmission lines are enabled by benzocyclobutene (BCB) (not shown) and desired thick electrodes utilizing gold (Au) plating. These will be helpful to ensure the desired high data rate. Controlled impedance microwave transmission lines insure high frequency operation with limited reflections due to impedance mismatch. The BCB is the dielectric used between the metal layers. High speed 50Ω controlled impedance RF transmission lines are formed with thick electroplated Au as the metal signal and ground layers with BCB as the separating dielectric.

The maximum voltage to operate the EAM array is determined by the designed breakdown voltage of the JFET transistors and the desired voltage swing across the EAM pixels to give maximum turn on/off contrast ratio. However, it should be noted that the higher the voltage swing, the higher becomes the power consumption. In accordance to a preferred embodiment of the present invention, the EAM pixels provide the most desired performance with a 5 or 6-volt maximum swing. The JFET transistors are therefore designed to withstand this voltage range on V_{DD} and V_{SS} lines.

The invention has now been described with reference to specific embodiments. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A drive circuit for operating an electro-absorption modulator (EAM) array having a plurality of EAM pixels, said drive circuit comprising:
a first switch (T1);
a second switch (T2) connected in series with the first switch;
a first power supply rail (Vdd) and a second power supply rail (Vss), wherein said first switch and said second switch are connected between said first power supply rail and said second power supply rail such that a current path is formed from said first power supply rail to said second power supply rail when said first switch and said second switch are closed;
wherein said first switch (T1) is configured to be connected in parallel with at least one capacitive load;
a current sensing circuit connected to said first switch and connectable to said at least one capacitive load and being configured to detect a current output from said at least one capacitive load when connected to said at least one capacitive load ; and
a control unit configured to:
in a first mode, close said first switch (T1) and open said second switch (T2) in order to discharge said at least one capacitive load;
in a second mode, open said first switch (T1) and close said second switch (T2) in order to charge said at least one capacitive load;
in a third mode, open said first switch (T1) and open said second switch (T2) in order to detect any current output from said at least one capacitive load by means of said current sensing circuit.

2. The drive circuit according to claim 1, wherein said first switch (T2) and said second switch (T2) are n-channel and/or p-channel field effect transistors (FET).

3. The drive circuit according to claims 1 and 2,
wherein said first switch and said second switch are n-channel FET transistors; and
wherein a first gate terminal and a second gate terminal of said first and second n-channel FET transistors are connected to a first alternating current input/drive signal (G1) and a second alternating current input/drive signal (G2), wherein said first alternating current input/drive signal and said second alternating current input/drive signal are complementary.

4. The drive circuit according to any one of the preceding claims, wherein the current sensing circuit comprises a current sense resistor (R2) and a OP amplifier, said current sense resistor and said OP amplifier configured to generate a sense voltage to detect the current output from said at least one capacitive load.

5. The drive circuit according to any one of the preceding claims, wherein said first switch is connected between the first power supply rail and said second switch, and wherein said second switch is connected between said first switch and said second power supply rail, wherein said first power supply rail has a first potential and said second power supply rail has a second potential.

6. An electro-absorption modulator (EAM) array comprising a plurality of EAM pixels arranged on a substrate, said EAM array comprising:
a plurality of drive circuits, each drive circuit comprising:
a first switch;
a second switch connected in series with the first switch;
a first power supply rail and a second power supply rail, wherein said first switch and said second switch are connected between said first power supply rail and said second power supply rail such that a current path is formed from said first power supply rail to said second power supply rail when said first switch and said second switch are closed;
wherein said first switch is connected in parallel with at least one EAM pixel of said plurality of EAM;
a current sensing circuit connected to said at least one EAM pixel and being configured to detect a current output from said at least one EAM pixel; and
a control unit configured to:
in a first mode, close said first switch and open said second switch in order to discharge said at least one EAM pixel;
in a second mode, open said first switch and close said second switch in order to charge said at least one EAM pixel;
in a third mode, open said first switch and open said second switch in order to detect any current output from said at least one EAM pixel by means of said current sensing circuit.

7. The EAM array according to claim 6, wherein said plurality of drive circuits are integrated in a Printed Circuit Board, PCB, and connected to said plurality of EAM pixels via wire-bond connections between said PCB and said substrate.

8. The EAM array according to claim 6, wherein said plurality of drive circuits are integrated with said plurality of EAM pixels in a monolithic arrangement on said substrate.

9. The EAM array according to claim 6, wherein said plurality of drive circuits are integrated on a CMOS ASIC circuit, said CMOS ASIC circuit being connected to said plurality of EAM pixels via flip-chip bond connections in a hybrid arrangement.

10. The EAM array according to any one of claims 6-9,
wherein said EAM array is integrated with a back-side flat mirror to reflect an incident light.

11. The EAM array according to claim 8, further comprising an external curved mirror arranged on the opposite side of said substrate relative to said EAM pixels, and wherein said EAM array is arranged to transmit the incident light onto said external curved mirror which is arranged to reflect said incident light back towards said EAM array.

12. The EAM array according to any one of claims 6-11, wherein said EAM pixels are arranged in an m-by-n array, said m-by-n array having m rows and n columns, and wherein said EAM array comprises n drive circuits, the first switch of each drive circuit being connected in parallel with each EAM pixel in a separate column of said m-by-n array.

13. The EAM array according to any one of claims 6-11, wherein the first switch of each drive circuit is connected in parallel with only two EAM pixels of said plurality of EAM pixels.
